# FASCICULE DE BREVET EUROPEEN

(11) **EP 1 470 689 B1**
(45) Date de publication et mention de la délivrance du brevet: **30.04.2008**
(21) Numéro de dépôt: 03712253.8
(22) Date de dépôt: 17.01.2003
(51) Int. Cl.: H04L 29/06

(54) **SYSTEME DE DIFFUSION DE MEDIA ET PROCEDE MIS EN OEUVRE DANS UN TEL SYSTEME**
VERFAHREN UND VORRICHTUNG ZUM MULTI-MEDIA-BROADCAST
SYSTEM FOR BROADCASTING MEDIA AND METHOD FOR USE IN SUCH A SYSTEM

(30) Priorité: 21.01.2002 FR 0200720
(43) Date de publication de la demande: 27.10.2004
(73) Titulaire: CARLIPA SYSTEMS, F-78860 Saint-Nom la Breteche (FR)
(72) Inventeur: RENE, David Raymond Michel, F-77570 Chateau-Landon (FR)
(74) Mandataire: Pontet, Bernard
(86) Numéro de dépôt international: PCT/FR2003/000141
(87) Numéro de publication internationale: WO 2003/063446

(56) Documents cités:
- EP-A- 0 394 939
- EP-A- 0 913 974
- US-A1- 2001 023 429

## Description

La présente invention se rapporte à un système de diffusion de média faisant intervenir un moteur de diffusion. Elle trouve une application particulièrement intéressante dans la production et diffusion de programme radio. Toutefois, l'invention est d'un cadre plus large puisqu'elle peut s'appliquer à tous type de média susceptible d'être diffusé. En effet, l'invention peut concourir à la diffusion de fichier audio, vidéo, des fichiers relatifs à des ordres de lancement de feux d'artifice, laser...

Il existe de nombreuses applications utilisées dans la production et la diffusion d'émission radio. D'une façon générale, la gestion d'une émission radio fait intervenir les étapes suivantes: l'acquisition, la production et la diffusion de média. L'acquisition permet de sauvegarder des fichiers musicaux dans une base de données. Cette phase fait notamment intervenir une numérisation des données analogiques. Les données sauvegardées peuvent provenir de différentes sources et sous différents formats.

L'étape de production permet de réaliser une sorte de grille des programmes destinées à être diffusées à un moment prédéterminé et pour une durée prédéterminée.

L'étape de diffusion concerne la diffusion effective des émissions radio (musique, parole, publicités, ...) Il est connu que cette étape fait intervenir un conducteur, succession de plages horaires vides à combler par des grilles de programmes. Ce conducteur peut être géré de façon manuelle ou automatique.

Cependant, les moteurs de diffusion de l'art antérieur sont souvent spécialisé pour un type de média prédéterminé.

Les documents D1:US 2001/023429 A1 (RAFTER MARK T ET AL) 20 septembre 2001 (2001-09-20), D2:EP-A-0 913 974 (SOHARD AG) 6 mai 1999 (1999-05-06) et D3: EP-A-0 394 939 (SONY CORP) 31 octobre 1990 (1990-10-31) sont des examples d'art anterieur.

La présente invention a pour but un nouveau système de diffusion capable de diffuser une pluralité de média.

Un autre but de l'invention est de proposer un système de diffusion souple dans lequel le programme de diffusion peut être facilement créé et modifié.

Un autre but de l'invention est un système de diffusion entièrement automatisé.

La présente invention propose donc un système de diffusion de média tel que décrit dans la revendication 1.

Suivant un mode de mise en oeuvre avantageux de l'invention, le moteur de diffusion et l'application cliente sont disposés dans deux unités de traitement distincts communicant selon un protocole de communication pour réseaux de communication tel que le protocole Internet (IP). Contrairement au système de l'art antérieur, dans la présente invention, l'application cliente dans laquelle les programmes de diffusion sont planifiés, est séparée du moteur de diffusion. Ceci permet l'élaboration de plusieurs applications clientes aptes à se connecter au moteur de diffusion et à agir notamment sur la liste principale qui est la liste de diffusion.

Selon l'invention, une liste pendante est une liste constituées d'objets média. Un objet média est une référence à un média ou le média lui même. Avantageusement, l'invention ne se limite pas à un média particulier, le média peut être un fichier audio, vidéo, un feux d'artifice ou une projection laser. Plus généralement, le média est un événement qui peut être diffusé dans le temps à partir d'un instant précis et pour une durée prédéterminée ou non. La durée est prédéterminée lorsqu'il s'agit par exemple d'une chanson enregistrée sur un CD; elle n'est pas prédéterminée lorsque la chanson est produite au cours d'un concert en direct.

La liste pendante comprend au moins un objet média. On peut la considérer comme un bloc temporel caractérisant un espace de temps de diffusion. Cela peut être une plage de publicité, une émission, une séquence de feu d'artifice, un journal d'information continue, etc...

Chaque liste pendante peut comprendre un numéro d'identification unique représenté notamment par une valeur numérique sur 64bits.

Selon une caractéristique avantageuse de l'invention, chaque objet média comprend une valeur numérique correspondant à sa position de diffusion au sein de la liste pendante. Ces valeurs numériques ne sont pas obligatoirement des suites. Ce qui est notable, c'est leur caractère progressif. De préférence, chaque valeur numérique est un nombre à virgule flottante.

Avantageusement, le premier objet média de la liste pendante contient un instant de départ absolu correspondant à l'instant de sa diffusion, cet instant de départ absolu étant un nombre en microsecondes obtenu par rapport à une origine temporelle prédéterminée. A titre d'exemple, l'origine temporelle prédéterminée peut être le premier janvier d'une année telle que l'an 2000, et l'instant de départ absolu est un nombre entier sur 64bits.

Cet instant de départ absolu peut ne pas être indiqué lorsque la liste pendante est attachée à un message télécommandé, c'est à dire un message provenant d'une unité de contrôle qui peut être externe au système de diffusion tel que défini. Ceci peut se produire dans le cas de transmission d'un signal de synchronisation en provenance d'une radio nationale vers des antennes régionales lors d'une plage publicitaire pour permettre une diffusion de publicités ciblées. Dans ce cas, l'instant de départ absolu du premier objet média est déterminé lors de la réception du message télécommandé. Pour ne pas perdre du temps, cet objet média est directement envoyé à la diffusion, puis les objets média suivant sont recalés et insérés dans la liste principale pour une diffusion.

Par ailleurs, le module de gestion peut comprendre des moyens pour déterminer la durée de chaque objet média et l'instant de départ absolu de cet objet média. Le module de gestion peut également comprendre des moyens pour substituer tout ou partie d'un objet média dans la liste principale par un autre objet média.

L'avantage des listes pendantes selon l'invention est qu'elles peuvent être manipulées directement dans le moteur de diffusion, dans la liste principale, et ce même quelques secondes avant la diffusion.

Le moteur de diffusion peut comprendre des moyens pour ouvrir une pluralité de sessions de diffusion, chacune étant dédiée à un type de média prédéterminé. Il peut aussi comprendre une liste de pilotes dans laquelle l'application cliente choisit un pilote en fonction de l'objet média contenu dans la liste pendante transmise vers ce moteur de diffusion, un pilote étant un programme informatique permettant au système d'exploitation d'un ordinateur de communiquer avec un périphérique déterminé.

Afin d'améliorer la compatibilité du système de diffusion selon l'invention, la session de diffusion peut comprendre des moyens pour encoder tout objet média selon un standard de diffusion prédéterminé.

Selon l'invention, le module de supervision peut comprendre des moyens aptes à ouvrir une session de diffusion associée à une organe de diffusion consistant en une carte de diffusion audio, en une carte de diffusion vidéo ou en un émetteur de feux d'artifice, en un projecteur laser, ou tout autre support pouvant diffuser le média concerné. On peut par exemple citer une diffusion audio ou vidéo sur Internet en flot continu ("streaming" en langue anglaise).

L'application cliente n'accède à une session de diffusion qu'après s'être valablement identifié auprès du module de supervision, par exemple au moins d'un numéro d'identification et d'un mot de passe.

Lorsque l'application cliente se connecte au module de gestion, le moteur de diffusion peut transmettre une liste contenant l'ensemble de pilotes disponibles, l'application cliente transmet alors la liste pendante accompagnée de pilotes adéquat pour la diffusion des objet média de la liste pendante.

Le module de gestion peut insérer la liste pendante dans la liste principale qu'en réponse à une consigne provenant de l'application cliente. Le moteur de diffusion peut être caractérisé comme un outil d'exécution de consignes provenant de l'application cliente.

Selon l'invention, lors de la transmission de la liste pendante vers le moteur de diffusion, l'application cliente peut transmettre également au moins un instant de départ absolu correspondant à l'instant de diffusion du premier objet média de la liste pendante, cet instant de départ absolu étant un nombre en microsecondes obtenu par rapport à une origine temporelle prédéterminée.

Par ailleurs, lors de l'insertion de la liste pendante dans la liste principale, le module de gestion peut déterminer la durée et l'instant absolu de départ de chaque objet média.

D'autres avantages et caractéristiques de l'invention apparaîtront à l'examen de la description détaillée d'un mode de mise en oeuvre nullement limitatif, et des dessins annexés sur lesquels :
- La figure 1 est un schéma simplifié illustrant une architecture globale du système selon l'invention;
- La figure 2 est un schéma simplifié illustrant plus en détail le moteur de diffusion selon l'invention; et
- La figure 3 est un schéma illustrant la mise en place de trois listes pendantes dans une liste principale de diffusion.

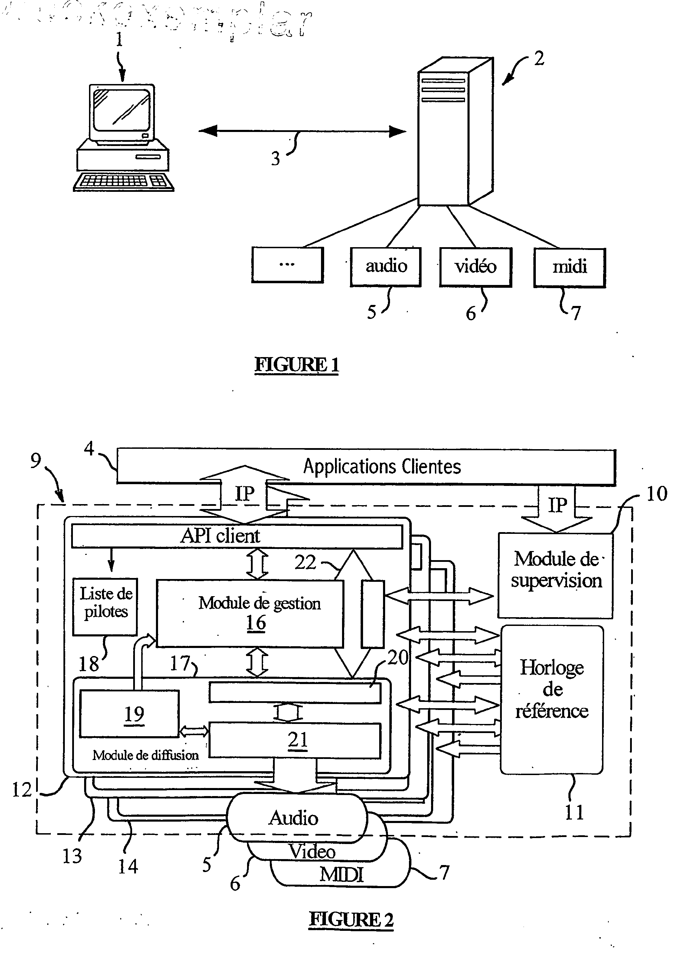

Sur la figure 1 on voit la disposition globale des éléments intervenants dans le système de diffusion selon l'invention. On distingue un poste de travail 1 dans lequel une application cliente est mise en oeuvre. Ce poste de travail 1 peut être un micro-ordinateur doté de composants conventionnels pour un bon fonctionnement au sein d'un réseau de communication et au moyen d'un protocole de communication de type client serveur. Ce poste de travail comprend une base de données dans laquelle sont sauvegardés des objets media. Dans ce poste de travail 1, les objets media correspondent à tout fichier audio susceptible d'être diffusé.

L'application client logée dans le poste de travail 1 est apte à communiquer, selon le protocole Internet (IP), avec un moteur de diffusion mis en oeuvre dans un serveur distant 2. Ce serveur distant 2 est relié à des organes de diffusion 5, 6 et 7. L'organe de diffusion 5 est une carte audio destinée à émettre du son dans le cadre d'une émission radio. L'organe de diffusion 6 comprend une carte vidéo destinée à une transmission vidéo par exemple dans le cadre d'une émission télévisée. L'organe de diffusion 7 est une carte son destinée à transmettre des signaux de type "midi". Bien que l'invention n'y soit pas limitée, on va décrire le système de diffusion selon l'invention pour la transmission de signaux audio (chanson, publicité, journal d'information....) à partir d'une base de données du poste de travail 1 contenant des fichiers audio vers l'organe de diffusion audio 5. L'application cliente mise en oeuvre dans le poste 1 a principalement pour rôle de planifier des programmes de diffusion alors que le moteur de diffusion mis en oeuvre dans le serveur 2 a essentiellement pour rôle de recevoir plusieurs programmes provenant de plusieurs applications clientes, de les caler temporellement afin de permettre une diffusion à des instants prédéterminés.

Le moteur de diffusion est autonome, il est séparé de la planification qui est effectuée par l'application cliente.

Sur la figure 2, l'élément 4 représente plusieurs application cliente de différent poste de travail accédant au moteur de diffusion 9.

Chaque application cliente 4, désireuse d'accéder au moteur de diffusion 9, doit d'abord se connecter au module de supervision 10. Ce module de supervision 10 écoute en permanence les requêtes, selon le protocole IP, en provenance des applications clientes. Chaque application cliente transmet un identifiant, un mot de passe et une adresse IP à travers laquelle elle désire transmettre sa planification vers le moteur de diffusion 9. Lorsque le module de supervision 10 valide une telle requête, elle ouvre une session de diffusion 12. Cette session de diffusion 12 est associée à l'organe de diffusion audio 5.

Lorsqu'une application cliente désire transmettre des fichiers vidéo, le module de supervision 10 ouvrira alors une session de diffusion 13 associée à l'organe de diffusion vidéo 6.

Lorsqu'une application cliente désire transmettre des fichiers du type "midi", le module de supervision ouvrira alors une session de diffusion 14 associée à l'organe de diffusion des fichiers de type midi 7.

Ainsi, chaque session de diffusion 12, 13, 14 est liée à un media spécifique. L'invention est notamment remarquable par le fait que l'ensemble des sessions de diffusion 12, 13 et 14 est cadencé au moyen d'une unique horloge de référence 11. tous les processus mis en oeuvre dans les différentes sessions de diffusion sont synchronisés par rapport à l'horloge de référence 11.

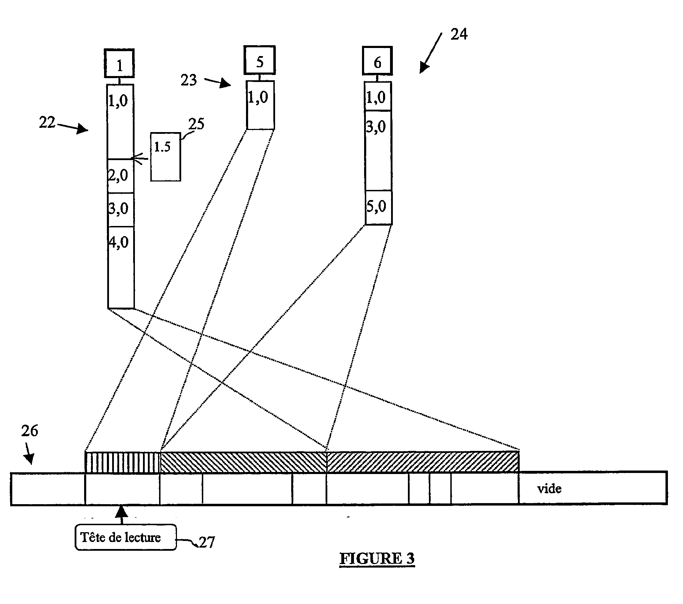

Selon l'invention, la planification des programmes destinés à être diffusés par le moteur de diffusion est réalisé par l'application cliente au sein du poste de travail 1. Cette planification se présente sous forme de plusieurs listes pendantes 22, 23 et 24 sur la figure 3. La liste pendante 22 comprend quatre objets media correspondant par exemple à quatre chansons. Cette liste pendante 22 est identifiée sous la valeur numérique "1" au sein de l'application cliente. Selon l'invention, cette liste pendante 22 peut avantageusement être modifiée avant transmission vers le moteur de diffusion 9 en incluant par exemple un objet media 25 entre le premier objet media "1,0" et le deuxième objet media "2,0". Cette intégration est rendue possible par le fait que les objets media sont codés par des nombres à virgules flottantes. Ainsi le nouvel objet media intégré peut prendre la valeur "1,5".

La liste pendante 23, identifiée par la valeur numérique "5", comprend un seul objet media.

La liste pendante 24, identifiée par la valeur numérique "6" comprend trois objets media dont les positionnements sont codés par les nombres à virgules flottantes "1,0", "3,0" et "5,0". Les deux objets media extrêmes de la liste pendante 24 correspondent par exemple à des jingles annonçant et terminant une plage publicitaire correspondant à l'objet media du milieu (dont le positionnement est codé par le nombre "3,0").

De préférence, chaque objet media comprend sa durée de diffusion et son instant de départ absolu, c'est à dire l'heure exacte à laquelle il doit être diffusé. Cet instant de départ absolu est un nombre de micro-secondes calculés depuis le 1^{er} Janvier 2000 et codé sur un entier de 64 bits.

Toutes les listes pendantes d'une même application cliente ne correspondent pas forcément à une diffusion continue, en outre elles peuvent être transmises vers le moteur de diffusion 9 à des moments différents.

Sur la figure 2, lorsque l'application cliente 4 est connectée à la session de diffusion 12 pour une transmission des listes pendantes 22, 23 et 24, un gestionnaire de pilote 18 liste l'ensemble des pilotes audio en sa possession et les transmets à l'application cliente 4. Les listes pendantes 22, 23 et 24 seront alors transmises après que l'application cliente a transmis son choix sur le type de pilote à utiliser pour la lecture et la diffusion des objets media contenus dans ces listes pendantes. La communication entre la session de diffusion 12 et l'application cliente 4 s'effectue à travers une interface 8 de programme d'application client API ("Application Program Interface").

Les listes pendantes transmises vers le moteur de diffusion 9 sont accumulées dans un module de gestion 16. Ces listes pendantes seront ensuite insérées dans une liste principale 26 (figure 3) conformément à leurs instants de départ absolu. La diffusion des objets media est obtenue à partir de cette liste principale. Sur la figure 3, on voit de quelle façon les listes pendantes 22, 23 et 24 sont disposées pour une diffusion continue. A titre illustratif, une tête de lecture 27 vient lire les objets media directement sur la liste principale 26. La disposition des listes pendantes sur la liste principale est réalisée en réponse à une consigne émise par l'application cliente. Pour que ces listes pendantes soient ainsi disposées dans la liste principale, les instants de départ absolu (au moins celui du premier objet media de chaque liste pendante) et la durée de chaque liste pendante doivent être connus. Ces données sont soit transmises par l'application cliente soit calculées par le module de gestion juste avant l'insertion de ces liste pendantes dans la liste principale. C'est l'application cliente qui transmet les consignes et les informations nécessaires à l'insertion des listes pendantes dans la liste principale.

La liste principale peut comprendre des zones vides qui peuvent être comblées par des listes pendantes transmises avant la diffusion. L'application cliente peut donc transmettre des listes pendantes qui sont accumulées dans le module de gestion et transmettre indépendamment des ordres d'insertion de ces listes dans la liste principale. Ces ordres peuvent correspondre à des indications suivantes :
- mettre liste pendante X dans la liste principale ;
- calculer la durée de la liste pendante X ;
- calculer la durée de la liste pendante X et le temps absolu de la liste pendante X ;
- calculer la durée de la liste pendante X et calculer le temps absolu de la liste pendante X et mettre la liste pendante X dans la liste principale.

Sur la figure 2, la session de diffusion 12 comprend également un module de diffusion 17 gérant les pilotes nécessaires à la diffusion des objets media.

Ce module de diffusion 17 comprend des applications de détection et de décodage 19 capable de déterminer le format du fichier correspondant à chaque objet media, par exemple en traitant l'en-tête d'un tel fichier, et de coder ce fichier dans un format générique. Un tel codage peut par exemple correspondre à la traduction des fichiers au format AVI, MPEG 2, ...., vers un fichier au format RVB ; un fichier de départ au format WAV, WMA, MP3, ou encore AIFF vers un fichier au format RAW. Les fichiers ainsi codés sont ensuite transmis vers une interface de sortie 21 connectée à l'organe de diffusion 5. L'interface de sortie 21 peut directement accéder à la liste principale 26 gérée par le module de gestion 16 via une API 20.

Par ailleurs, le module de diffusion 17 peut obtenir les informations relatives au pilote directement à partir de l'API client 8 via une liaison directe 22.

Le système selon l'invention permet également de traiter les situations d'urgence. Par exemple, il est possible d'intégrer une liste pendante prioritaire provenant par exemple d'une application cliente, dans une liste principale en lieu et place de tout ou partie d'une ou plusieurs listes pendantes pré-insérées. Il est alors possible de supprimer complètement une liste pendante pré-insérée et partiellement recouvert par la liste prioritaire. Il peut ainsi se créer une zone vide. Le moteur de diffusion peut automatiquement recalculer les instants de départ absolu des listes pendantes pré- insérées de façon à les caler en continu à l'extrémité de la liste pendante prioritaire.

La présente invention permet également de gérer des situations en direct ("live"). Cela correspond à des liste pendantes pour lesquelles la durée n'est pas définie. Une telle liste pendante sera coupée par un message télécommandé ou par l'insertion d'une liste pendante prédéterminée. Le moteur de diffusion comprend alors des moyens pour recalculer l'ensemble des instants de départ absolu.

Un message télécommandé est une consigne provenant d'une application client ou d'ailleurs (synchronisation satellite provenant d'un serveur distant de contrôle). Tout ordre de télécommande arrive au moteur de diffusion via l'API 8. Chaque message de la télécommande est lié à un objet media. Ces messages peuvent comprendre des ordres de lecture, de pause, de stop,.... De préférence, ces ordres ne peuvent pas être exécutés dans des plages horaires prédéterminées, par exemple pendant la diffusion de l'objet media.

Bien sûr, l'invention n'est pas limitée aux exemples qui viennent d'être décrits et de nombreux aménagements peuvent être apportés à ces exemples sans sortir du cadre de l'invention.

## Revendications

1. Système de diffusion de média comprenant au moins une application cliente (4) et un moteur de diffusion (9), l'application cliente comprenant:
- des moyens d'élaboration pour élaborer au moins une liste pendante (22, 23, 24), cette liste pendante comprenant au moins un objet média destiné à être diffusé,
- des moyens de transmission pour transmettre la liste pendante vers le moteur de diffusion (9);
le moteur de diffusion (9) comprenant:
- une session de diffusion (12, 13, 14) comprenant un module de gestion (16) apte à recevoir la liste pendante provenant de l'application cliente (4) et insérer cette liste pendante au sein d'une liste principale (26) comprenant une pluralité de listes pendantes, et un module de diffusion (17) apte à diffuser le contenu de cette liste principale au moyen d'une organe de diffusion (5, 6, 7) de média,
- un module de supervision (10) pour authentifier une application cliente (4) désireuse d'accéder au moteur de diffusion et pour ouvrir au moins une session de diffusion (12, 13, 14) le cas échéant;
**caractérisé en ce que** le moteur de diffusion (9) comprend une horloge de référence (11) pour synchroniser l'ensemble des composants du moteur de diffusion;
et **en ce que** chaque objet média comprend une valeur numérique correspondant à sa position de diffusion au sein de la liste pendante, chaque valeur numérique étant un nombre à virgule flottante.

2. Système selon la revendication 1, **caractérisé en ce que** le moteur de diffusion et l'application cliente sont disposés dans deux unités de traitement (1, 2) distincts communicant selon un protocole de communication pour réseaux de communication tel que le protocole Internet (IP).

3. Système selon la revendication 1 ou 2, **caractérisé en ce que** le moteur de diffusion comprend des moyens pour ouvrir une pluralité de sessions de diffusion, chacune étant dédiée à un type de média prédéterminé.

4. Système selon l'une quelconque des revendications précédentes, **caractérisé en ce que** le premier objet média de la liste pendante contient un instant de départ absolu correspondant à l'instant de sa diffusion, cet instant de départ absolu étant un nombre en microsecondes obtenu par rapport à une origine temporelle prédéterminée : et **en ce que** l'origine temporelle prédéterminée est le premier janvier d'une année donnée, et l'instant de départ absolu est un nombre entier sur 64bits.

5. Système selon la revendication 4, **caractérisé en ce que** le module de gestion comprend des moyens pour déterminer la durée de chaque objet média et l'instant de départ absolu de cet objet média.

6. Système selon l'une quelconque des revendications précédentes, **caractérisé en ce que** pour une liste pendante comprenant une pluralité d'objets média, les valeurs numériques correspondant aux positions de diffusion ne forment pas une suite.

7. Système selon l'une quelconque des revendications précédentes, **caractérisé en ce que** chaque liste pendante comprend un numéro d'identification unique.

8. Système selon l'une quelconque des revendications précédentes, **caractérisé en ce que** la session de diffusion comprend des moyens (19) pour encoder tout objet média selon un standard de diffusion prédéterminé.

9. Système selon l'une quelconque des revendications précédentes, **caractérisé en ce que** le module de gestion comprend des moyens pour substituer tout ou partie d'un objet média dans la liste principale par un autre objet média.

10. Système selon l'une quelconque des revendications précédentes, **caractérisé en ce que** le moteur de diffusion comprend une liste de pilotes (18) dans laquelle l'application cliente choisit un pilote en fonction de l'objet média contenu dans la liste pendante transmise vers le moteur de diffusion.

11. Système selon l'une quelconque des revendications précédentes, **caractérisé en ce que** le module de supervision comprend des moyens aptes à ouvrir une session de diffusion associée à une organe de diffusion consistant en une carte de diffusion audio.

12. Système selon l'une quelconque des revendications précédentes, **caractérisé en ce que** le module de supervision comprend des moyens aptes à ouvrir une session de diffusion associée à une organe de diffusion consistant en une carte de diffusion vidéo.

13. Système selon l'une quelconque des revendications précédentes, **caractérisé en ce que** le module de supervision comprend des moyens apte à ouvrir une session de diffusion associée à une organe de diffusion consistant en un émetteur de feux d'artifice.

14. Système selon l'une quelconque des revendications précédentes, **caractérisé en ce que** le module de supervision comprend des moyens apte à ouvrir une session de diffusion associée à une organe de diffusion consistant en un projecteur laser.

## Claims

1. Media broadcasting system comprising at least one client application (4) and a broadcasting engine (9), the client application comprising:
- generating means for generating at least one drop-down list (22, 23, 24), this drop-down list comprising at least one media object intended for broadcasting,
- transmission means for transmitting the drop-down list to the broadcasting engine (9),
the broadcasting engine (9) comprising:
- a broadcasting session (12, 13, 14) comprising a management module (16) capable of receiving the drop-down list coming from the client application (4) and of inserting that drop-down list in a main list (26) comprising a plurality of drop-down lists, and a broadcasting module (17) capable of broadcasting the content of that main list by means of a media broadcasting device (5, 6, 7),
- a supervision module (10) for authenticating a client application (4) wishing to access the broadcasting engine and for opening at least one broadcasting session (12, 13, 14) if appropriate;
**characterized in that** the broadcasting engine (9) comprises a reference clock (11) for synchronizing all of the components of the broadcasting engine, and **in that** each media object comprises a numerical value corresponding to its broadcasting position within the drop-down list, each numerical value being a floating point number.

2. System according to claim 1, **characterized in that** the broadcasting engine and the client application are disposed in two separate processing units (1, 2) communicating according to a communication protocol for communication networks such as the Internet protocol (IP).

3. System according to claim 1 or 2, **characterized in that** the broadcasting engine comprises means for opening a plurality of different broadcasting sessions, each one being dedicated to a predetermined type of media.

4. System according any one of the preceding claims, **characterized in that** the first media object in the drop-down list contains an absolute start time corresponding to the time of its broadcasting, this absolute start time being a number of microseconds obtained with respect to a predetermined time origin; and **in that** the predetermined time origin is the first of January of a given year, and the absolute start time is an integer in 64 bits.

5. System according to claim 4, **characterized in that** the management module comprises means for determining the duration of each media object and the absolute start time of that media object.

6. System according to any one of the preceding claims, **characterized in that** for a drop-down list comprising a plurality of media objects, the numerical values corresponding to the broadcasting positions do not form a series.

7. System according to any one of the preceding claims, **characterized in that** each drop-down list comprises a unique identification number.

8. System according to any one of the preceding claims, **characterized in that** the broadcasting session comprises means (19) for encoding any media object according to a predetermined broadcasting standard.

9. System according to any one of the preceding claims, **characterized in that** the management module comprises means for substituting all or part of a media object in the main list by another media object.

10. System according to any one of the preceding claims, **characterized in that** the broadcasting engine comprises a list of drivers (18) from which the client application chooses a driver according to the media object contained in the drop-down list transmitted to the broadcasting engine.

11. System according to any one of the preceding claims, **characterized in that** the supervision module comprises means capable of opening a broadcasting session associated with a broadcasting device consisting of an audio broadcasting card.

12. System according to any one of the preceding claims, **characterized in that** the supervision module comprises means capable of opening a broadcasting session associated with a broadcasting device consisting of a video broadcasting card.

13. System according to any one of the preceding claims, **characterized in that** the supervision module comprises means capable of opening a broadcasting session associated with a broadcasting device consisting of a fireworks transmitter.

14. System according to any one of the preceding claims, **characterized in that** the supervision module comprises means capable of opening a broadcasting session associated with a broadcasting device consisting of a laser projector.

## Patentansprüche

1. Media-Ausstrahlungssystem, umfassend mindestens eine Kundenanwendung (4) und einen Ausstrahlungsmotor (9), wobei die Kundenanwendung umfasst:
- Erarbeitungsmittel zum Erarbeiten mindestens einer hängenden Liste (22, 23, 24), wobei diese hängende Liste mindestens ein Media-Objekt umfasst, das dazu bestimmt ist, ausgestrahlt zu werden,
- Übertragungsmittel zum Übertragen der hängenden Liste zu dem Ausstrahlungsmotor (9),
wobei der Ausstrahlungsmotor (9) umfasst:
- eine Ausstrahlungssitzung (12, 13, 14), umfassend ein Verwaltungsmodul (16), das in der Lage ist, die von der Kundenanwendung (4) kommende hängende Liste zu empfangen und diese hängende Liste in eine Hauptliste (26) einzusetzen, die eine Mehrzahl von hängenden Listen umfasst, und ein Ausstrahlungsmodul (17), das in der Lage ist, den Inhalt dieser Hauptliste mit Hilfe eines Media-Ausstrahlungsorgans (5, 6, 7) auszustrahlen,
- ein Supervisionsmodul (10) zur Authentifizierung einer Kundenanwendung (4), die auf den Ausstrahlungsmotor zugreifen möchte, und gegebenenfalls zum Öffnen mindestens einer Ausstrahlungssitzung (12, 13, 14);
**dadurch gekennzeichnet, dass** der Austrahlungsmotor (9) einen Bezugszeitgeber (11) zum Synchronisieren der Gesamtheit der Bauelemente des Ausstrahlungsmotors umfasst;
und dass jedes Media-Objekt einen numerischen Wert umfasst, der seiner Ausstrahlungsposition in der hängenden Liste entspricht, wobei jeder numerische Wert eine Gleitkommazahl ist.

2. System nach Anspruch 1, **dadurch gekennzeichnet, dass** der Ausstrahlungsmotor und die Kundenanwendung in zwei getrennten Verarbeitungseinheiten (1, 2) angeordnet sind, die nach einem Kommunikationsprotokoll für Kommunikationsnetze wie dem Internetprotokoll (IP) kommunizieren.

3. System nach Annspruch 1 oder 2, **dadurch gekennzeichnet, dass** der Ausstrahlungsmotor Mittel zum Öffnen einer Mehrzahl von Ausstrahlungssitzungen umfasst, wobei jede einem vorbestimmten Mediatyp gewidmet ist.

4. System nach einem der vorhergehenden Ansprüche, **dadurch gekennzeichnet, dass** das erste Mediaobjekt der hängenden Liste einen absoluten Startzeitpunkt enthält, der dem Zeitpunkt seiner Ausstrahlung entspricht, wobei dieser absolute Startzeitpunkt eine in Bezug auf einen vorbestimmten Zeitursprung erhaltene Zahl in Mikrosekunden ist; und dass der vorbestimmte Zeitursprung der erste Januar eines gegebenen Jahres ist, und der absolute Startzeitpunkt eine ganze Zahl auf 65 Bit ist.

5. System nach Anspruch 4, **dadurch gekennzeichnet, dass** das Verwaltungsmodul Mittel zum Bestimmen der Dauer jedes Media-Objekts und des absoluten Startzeitpunkts dieses Media-Objekts umfasst.

6. System nach einem der vorhergehenden Ansprüche, **dadurch gekennzeichnet, dass** bei einer hängenden Liste, die eine Mehrzahl von Media-Objekten umfasst, die den Ausstrahlungspositionen entsprechenden numerischen Werte keine Folge bilden.

7. System nach einem der vorhergehenden Ansprüche, **dadurch gekennzeichnet, dass** jede hängende Liste eine einzige Identifikationsnummer umfasst.

8. System nach einem der vorhergehenden Ansprüche, **dadurch gekennzeichnet, dass** die Ausstrahlungssitzung Mittel (19) zum Codieren jedes Media-Objekts nach einem vorbestimmten Ausstrahlungsstandard umfasst.

9. System nach einem der vorhergehenden Ansprüche, **dadurch gekennzeichnet, dass** das Verwaltungsmodul Mittel zum Ersetzen eines Media-Objekts in der Hauptliste ganz oder teilweise durch ein anderes Media-Objekt umfasst.

10. System nach einem der vorhergehenden Ansprüche, **dadurch gekennzeichnet, dass** der Ausstrahlungsmotor eine Pilotenlisten (18) umfasst, in der die Kundenanwendung einen Pilot in Abhängigkeit von dem Media-Objekt wählt, das in der zum Ausstrahlungsmotor übertragenen hängenden Liste enthalten ist.

11. System nach einem der vorhergehenden Ansprüche, **dadurch gekennzeichnet, dass** das Supervisionsmodul Mittel umfasst, die in der Lage sind, eine Ausstrahlungssitzung zu öffnen, die einem Ausstrahlungsorgan zugeordnet ist, das aus einer Audioausstrahlungskarte besteht.

12. System nach einem der vorhergehenden Ansprüche, **dadurch gekennzeichnet, dass** das Überwachungsmodul Mittel umfasst, die in der Lage sind, eine Ausstrahlungssitzung zu öffnen, die einem Ausstrahlungsorgan zugeordnet ist, das aus einer Videoausstrahlungskarte besteht.

13. System nach einem der vorhergehenden Ansprüche, **dadurch gekennzeichnet, dass** das Supervisionsmodul Mittel umfasst, die in der Lage sind, eine Ausstrahlungssitzung zu öffnen, die einem Ausstrahlungsorgan zugeordnet ist, das aus einem Feuerwerk besteht.

14. System nach einem der vorhergehenden Ansprüche, **dadurch gekennzeichnet, dass** das Supervisionsmodul Mittel umfasst, die in der Lage sind, eine Ausstrahlungssitzung zu öffnen, die einem Ausstrahlungsorgan zugeordnet ist, das aus einem Laserprojektor besteht.
